Europäisches Patentamt

European Patent Office

Office européen des brevets

(11) Veröffentlichungsnummer: **0 273 006**
**B1**

(12) **EUROPÄISCHE PATENTSCHRIFT**

(45) Veröffentlichungstag der Patentschrift:
08.11.89

(51) Int. Cl.⁴: **F16B 13/04**

(21) Anmeldenummer: **87810691.3**

(22) Anmeldetag: **24.11.87**

(54) Spreizdübel.

(30) Priorität: **22.12.86 DE 3643911**

(73) Patentinhaber: **HILTI Aktiengesellschaft,
FL-9494 Schaan(LI)**

(43) Veröffentlichungstag der Anmeldung:
**29.06.88 Patentblatt 88/26**

(72) Erfinder: **Gschwend, Hans, Galenburst 238,
FL-9493 Mauren(LI)**
Erfinder: **Hachtel, Hans, Vorarlbergerstrasse 47,
FL-9486 Schaanwald(LI)**
Erfinder: **Wanger, Werner, Steinbös 511,
FL-9493 Mauren(LI)**

(45) Bekanntmachung des Hinweises auf die Patenterteilung:
**08.11.89 Patentblatt 89/45**

(84) Benannte Vertragsstaaten:
**AT CH DE ES FR GB LI SE**

(74) Vertreter: **Wildi, Roland, Hilti Aktiengesellschaft
Patentabteilung, FL-9490 Schaan(LI)**

(56) Entgegenhaltungen:
**DE-A- 2 632 487
DE-A- 3 333 493
US-A- 1 367 080
US-A- 1 370 319
US-A- 1 688 087
US-A- 2 527 128
US-A- 3 241 420**

## Beschreibung

Die Erfindung betrifft einen Spreizdübel mit unter Federkraft in ihrer Axialprojektion radial ausrückbaren Spreizelementen, einem den Spreizelementen in Setzrichtung vorgelagerten, Lastangriffsmittel aufweisenden Stützlager und einem die Spreizelemente in eingerückter Stellung haltenden lösbaren Spannglied.

Zum Befestigen von Gegenständen in Untergründen, wie beispielsweise Beton, finden in rissgefährdeten Zonen vermehrt Spreizdübel Verwendung, die unter Durchgriff einer Aufnahmebohrung sich an Schultern des Untergrundes formschlüssig axial abstützen. Die Schultern können beispielsweise durch die Kontur einer Erweiterung der Aufnahmebohrung oder durch die Rückseite des von der Aufnahmebohrung durchsetzten Untergrundes gebildet sein.

Ein solcher aus der US-A 3 241 420 bekannter Spreizdübel verfügt über ein Stützlager für zwei daran angelenkte und diametral zueinander unter Federkraft ausschwenkbare armartige Spreizelemente. Das Stützlager weist ferner ein Lastangriffsmittel in Form eines Innengewindes auf, in welches zum Spannzwecke eine Schraube eingedreht werden kann. Ein Spannglied hält die unter Federkraft stehenden Spreizelemente während des Durchführens durch die Aufnahmebohrung in eingerückter Stellung, wodurch hinderliche Reibungskräfte zwischen den Spreizelementen und der Wandung der Aufnahmebohrung verhindert werden. Nachdem die freien Enden der Spreizelemente die beispielsweise durch die Rückseite des Untergrundes gebildete Schulter erreicht haben, werden die Spreizelemente freigegeben, was mittels eines Hilfswerkzeuges durch Verschieben des Stützlagers erfolgt.

Das Ausrücken der Spreizelemente ist durch Anschlagmittel begrenzt. Aufgrund dieser Anschlagmittel weist dieser bekannte Spreizdübel eine einzige definierte Spreizstellung auf, in der er sich entgegen der Setzrichtung starr am Untergrund abstützt. Demzufolge treten Probleme bei dynamischen Belastungen auf und es besteht keine Möglichkeit, die Relaxation des Untergrundes zu kompensieren. Das punktweise Abstützen der freien Enden der Spreizelemente am Untergrund führt zudem zu hoher spezifischer Druckbeanspruchung der Spreizelemente und des Untergrundes.

Der Erfindung liegt die Aufgabe zugrunde, einen Spreizdübel für formschlüssiges Abstützen an Schultern des Untergrundes zu schaffen, der sich zur Aufnahme dynamischer Belastungen und zum Ausgleich von Relaxation des Untergrundes eignet sowie überhöhte spezifische Druckbeanspruchungen unterbindet.

Erfindungsgemäss wird die Aufgabe dadurch gelöst, dass die Spreizelemente als radial geschlitzte, in eingerückter Stellung zwischen dem Stützlager und dem Spannglied verspannte, im wesentlichen in hohlkegelige Form gebrachte Ringscheiben aus Federblech ausgebildet sind.

Zweckmässig sind mehrere Ringscheiben übereinanderliegend zu einem Paket gestapelt vorgesehen, wobei die Schlitze der einzelnen Ringscheiben in Umfangsrichtung zueinander möglichst versetzt sind. Für das Einbringen des Spreizdübels in die Aufnahmebohrung muss der Aussendurchmesser der Ringscheiben kleiner als der Bohrungsdurchmesser sein. Durch Uebereinanderschieben der durch die Schlitzung geschaffenen freien Bereiche der Ringscheiben in Umfangsrichtung lassen sich die Ringscheiben in die Form eines Hohlkegels mit gegenüber der Ursprungsform der Ringscheiben kleinerem Aussendurchmesser bringen. In dieser Form werden die Ringscheiben für das Einführen in die Aufnahmebohrung zwischen Stützlager und Spannglied gehalten. Nach dem axialen Ueberfahren einer untergrundseitigen Schulter durch die Ringscheiben wird durch axiale Freigabe des Spanngliedes vom Stützlager das Entspannen der Ringscheiben und damit deren selbsttätiges radiales Ausrücken ermöglicht. Die Ringscheiben hintergreifen somit formschlüssig die Schultern am Untergrund.

Nach dem Entfernen des Spanngliedes kann ein dem Festspannen von Gegenständen dienendes Anschlussteil, beispielsweise eine Schraube, mit den Lastangriffsmitteln des Stützlagers in Eingriff gebracht werden. Von der Schraube an das Stützlager übertragene Zugbelastung wird vom Stützlager auf die Ringscheiben und von diesen durch Anlage an der Schulter auf den Untergrund übertragen. Die Ringscheiben stützen sich dabei mit der Stirnseite umlaufend ab.

Mit der als Anschlussteil dienenden Schraube lässt sich eine ausreichende Zugspannung aufbringen, um beim Festspannen der Gegenstände ein teilweises Einziehen der zentrumsnahen Zone der Ringscheiben in den an die Schulter angrenzenden Auslauf der Aufnahmebohrung zu bewirken. Die Ringscheiben werden so elastisch deformiert, wobei sie im wesentlichen kegelartig verformt werden und in Umfangsrichtung wellige Form annehmen können.

Durch diese Deformation wird eine Vorspannung erzielt, welche dazu geeignet ist, allfällige Relaxation des Untergrundes zu kompensieren und dynamische Belastungen aufzunehmen.

Das für den Einführvorgang des Spreizdübels mit dem Stützlager axial unverschiebbar verbundene Spannglied durchgreift zweckmässig die Ringscheiben zentrisch und ist im Stützlager festgelegt. Die Ringscheiben werden vom Spannglied gegen das Stützlager gedrückt und in Vorspannung gehalten. Mit Vorteil liegen die Angriffspunkte zwischen dem Spannglied und den Ringscheiben dem Zentrum der Ringscheiben näher als die Angriffspunkte zwischen dem Stützlager und den Ringscheiben. Dadurch sind die Ringscheiben schirmartig, vom Stützlager weg sich hohlkegelig öffnend, eingespannt.

Vorzugsweise sind die Angriffspunkte des Spanngliedes von einer zumindest teilweise sich zu den Ringscheiben hin kegelförmig erweiternden Stirnseite des Spanngliedes gebildet. Dadurch wird ein kegeliger Angriff des Spanngliedes an den hohlkegeligen Ringscheiben erzielt, wodurch unerwünschte Deformation der Ringscheiben vermieden werden kann, da diese entlang der Seiten der Kegelkontur der Stirnseite abgestützt sind. Die kegelförmige Stirnseite kann beispielsweise durch Flanken von Stützrippen des Spanngliedes gebildet sein, was herstellungstechnisch vorteilhaft ist, wenn das Spannglied als Spritzgussteil gestaltet wird.

Zur Vermeidung unerwünschter Deformation der Ringscheiben sind nach einer weiteren Ausführungsform die Angriffspunkte des Stützlagers von einer zumindest teilweise sich zu den Ringscheiben hin kegelförmig erweiternden Stirnseite des Stützlagers gebildet.

Zur einfachen Handhabung des Spreizdübels sowohl beim Zusammenbau des Dübels als auch beim Setzvorgang desselben weisen vorzugsweise das Spannglied und das Stützlager Kupplungsmittel zur gegenseitigen Arretierung in der die Ringscheiben eingerückt haltenden Stellung auf. Die Kupplungsmittel sind lösbar und zweckmässig bajonettverschlussartig ausgebildet.

Um das Lösen der Kupplungsverbindung zwischen Spannglied und Stützlager zu erleichtern, können am Stützlager Haltemittel vorgesehen sein, die an der Oberfläche der Aufnahmebohrung angreifen und so einem Verdrehen des Stützkörpers entgegenwirken. Bei den Haltemitteln kann es sich beispielsweise um einen elastischen O-Ring oder zackenartige Vorsprünge handeln.

Mit Vorteil weisen die bajonettverschlussartigen Kupplungsmittel im Stützlager radial verschiebbare, in eine Zentralbohrung des Stützlagers ragende, über die Mantelkontur des Stützlagers ausrückbare Zapfen auf. Nach dem Lösen der Kupplungsverbindung und dem Entnehmen des Spanngliedes wird das Anschlussteil durch die Ringscheiben hindurch in das Stützlager eingeführt. Dabei läuft das Anschlussteil an den Zapfen auf und drängt diese radial nach aussen gegen die Wand der Aufnahmebohrung. Für das Einschrauben des Anschlussteiles wird das Stützlager auf diese Weise gegen Verdrehen in der Aufnahmebohrung gesichert. Das Anschlussteil kann zum Auslenken der Zapfen auch über einen kegeligen Fortsatz verfügen, wodurch sich grosse Verschiebewege der Zapfen bewerkstelligen lassen.

Die Erfindung wird nachstehend anhand eines Ausführungsbeispiels näher erläutert. Es zeigen:

Fig. 1 einen Spreizdübel im Längsschnitt;
Fig. 2 ein Verriegelungsteil des Spanngliedes in Ansicht;
Fig. 3 eine Spannhülse des Spanngliedes in Ansicht;
Fig. 4 ein Ringscheiben-Paket im Längsschnitt;
Fig. 5 das Stützlager im Längsschnitt;
Fig. 6 - 9 den Setzvorgang und Einsatz des Spreizdübels in schrittweiser Darstellung, im Längsschnitt.

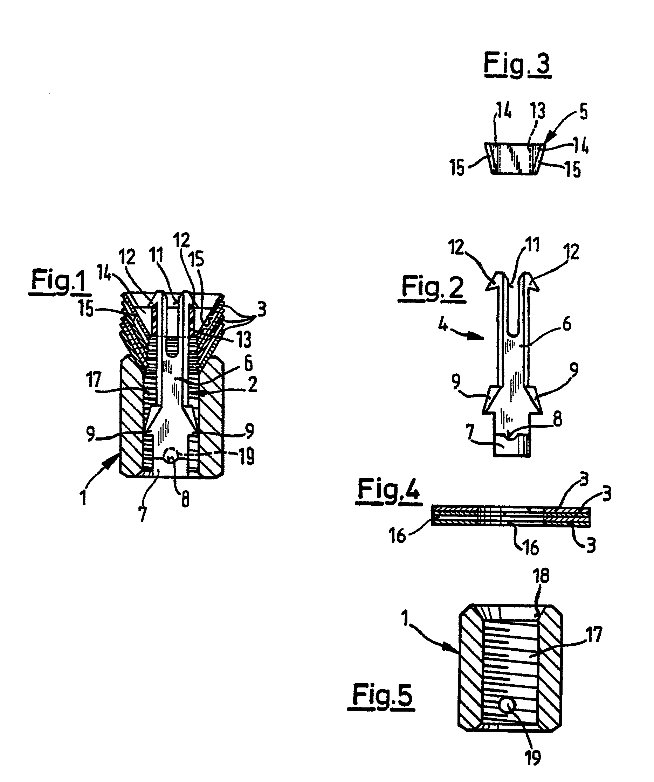

Der in Fig. 1 dargestellte setzbereite Spreizdübel besteht im wesentlichen aus einem insgesamt mit 1 bezeichneten Stützlager, einem insgesamt mit 2 bezeichneten Spannglied und zu einem Paket übereinander gestapelten Ringscheiben 3.

Das Spannglied 2 setzt sich zusammen aus einem insgesamt mit 4 bezeichneten, in der Fig. 2 dargestellten Verriegelungsteil und einer der Fig. 3 entsprechenden, insgesamt mit 5 bezeichneten Spannhülse, die bei montiertem Spannglied 2 verschiebbar auf dem Verriegelungsteil 4 sitzt. Das Verriegelungsteil 4 und die Spannhülse 5 sind vor allem aus Gründen einfacher Herstellbarkeit als Spritzgussteil aus Kunststoff gefertigt.

Das Verriegelungsteil 4 besteht aus einem Schaft 6 mit im wesentlichen quadratischem Querschnitt und zwei am einen Ende des Schaftes angeformten, den Schaft einander seitlich gegenüberliegend überragenden Stützarmen 7. Die dem Ende des Schaftes 6 abgewandte Schulterfläche der Stützarme 7 ist mit sich radial erstreckenden Rastmulden 8 versehen. In axialem Abstand zu den Stützarmen 7 ist der Schaft 6 seitlich von zwei Anschlagschultern 9 mit konischer Aussenkontur überragt. In dem von Stützarmen 7 abgewandten Endbereich ist der Schaft 6 durch einen Einschnitt 11 zwecks Erzielung radialer Federbarkeit zweigeteilt. Dieser Endbereich des Schaftes 6 wird seitlich von zwei Stütznasen 12 überragt.

Die Spannhülse 5 verfügt über ein Führungsrohr 13 mit dem Querschnitt des Schaftes 6 entsprechender quadratischer Innenkontur. In den Ecken des Führungsrohres 13 sitzen Stützrippen 14 mit zu den Stützarmen 7 des Verriegelungsteiles 4 hin sich dem Zentrum nähernden Flanken 15. Die Flanken 15 sind Teile einer den Ringscheiben 3 zugewandten Stirnseite des Spanngliedes 2 und liegen auf einer gedachten Kegelfläche.

Beim Montieren des Spanngliedes 2 laufen die Stütznasen 12 des Verriegelungsteiles 4 an der Innenkontur des Führungsrohres 13 auf, wodurch ein Zusammendrücken des Schaftes 6 im Bereich des Einschnittes 11 bewirkt wird. Sobald die Spannhülse 5 die Stütznasen 12 passiert hat, weitet sich der Schaft 6 durch Eigenfederung wieder auf; die Spannhülse 5 ist somit zwischen den Anschlagschultern 9 und den Stütznasen 12 drehfest gefangen.

Die Fig. 4 zeigt ein Paket übereinander gestapelter planer Ringscheiben 3 aus Federblech, welche einen radial durchgehenden Schlitz 16 aufweisen. Da die Ringscheiben 3 zueinander in unterschiedlichen Drehlungen liegen, ist nur ein Teil der Schlitze 16 erkennbar.

Das in Fig. 5 dargestellte Stützlager 1 ist rohrförmig ausgebildet und verfügt über eine Zentralbohrung mit durchgehendem Innengewinde 17. In dem entgegen der Setzrichtung weisenden Endbereich des Stützlagers 1 mündet die Zentralbohrung in eine stirnseitige kegelige Vertiefung 18. In dem der Vertiefung 18 gegenüberliegenden Endbereich des Stützlagers 1 sind zwei seitlich und diametral zueinander in die Zentralbohrung ragende Zapfen 19 verschiebbar angeordnet.

Bei setzbereitem Spreizdübel ist das montierte Spannglied 2 mit dem Stützlager 1 lösbar gekuppelt, wobei sich die Stützarme 7 an den in die Rastmulden 8 eintauchenden Zapfen 19 axial abschultern. In diese montierte Stellung wird das Spannglied 2 gebracht, indem das Verriegelungsteil 4 mit den Stütznasen 12 voran bis zum Auflaufen der Stützarme 7 an den Zapfen 19 in das Stützlager 1 eingeschoben wird. Das Spannglied 2 durchgreift dabei mit dem Schaft 6 die durch einen externen Vorgang in hohlkegelige Form gebrachten und gegen die Vertiefung 18 gehaltenen Ringscheiben 3 und mit den Stütznasen 12 die Spannhülse 5. Die Stütznasen 12 hinterfassen so die an den Ringscheiben 3 axial aufliegende Spannhülse 5, wie in Fig. 1 gezeigt. In dieser gekuppelten Stellung wird das Spannglied 2 durch die Vorspannkraft der elastisch in hohlkegelige Form gebrachten Ringscheiben 3 gehalten. Das Paket der Ringscheiben 3 stützt sich einerseits in der Angriffspunkte bildenden kegeligen Vertiefung 18 des Stützlagers 1 und andererseits an den als Angriffspunkte dienenden Flanken 15 der Spannhülse 5 ab, die ihrerseits an den als Widerlager dienenden Stütznasen 12 anliegt. In dieser verformten Stellung überragt der Aussendurchmesser der Ringscheiben 3 die Mantelkontur des Stützlagers 1 nicht.

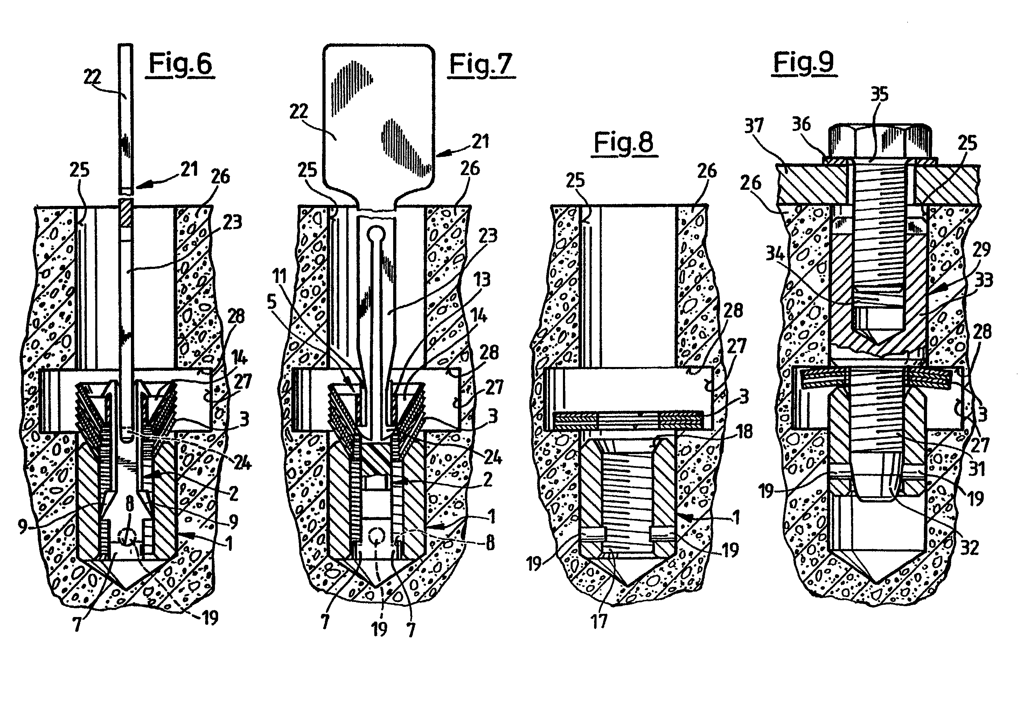

Dem Setzen des Spreizdübels dient ein den Fig. 6 und 7 entnehmbares insgesamt mit 21 bezeichnetes Einführwerkzeug. Es besteht aus Flachmaterial und verfügt über ein Griffteil 22 und einen an dieses angeformten Haltefinger 23. Der Haltefinger 23 ist vom freien Ende her längsgeschlitzt und dadurch zusammenfederbar. Im freien Endbereich trägt der Haltefinger 23 zwei seitlich vorstehende Nasen 24. Zum Einstossen des Spreizdübels in eine Aufnahmebohrung 25 wird das Einführwerkzeug 21 mit dem Haltefinger 23 in den Einschnitt 11 eingefahren, wodurch es zum Unterfassen des Führungsrohres 13 der Spannhülse 5 durch die Nasen 24 des Haltefingers 23 kommt. Wie die Fig. 6 zeigt, wird der Spreizdübel bis zum Auflaufen am Grund der Aufnahmebohrung 25 in diese eingestossen. Die in einen Untergrund 26, beispielsweise Beton, sich erstreckende Aufnahmebohrung 25 weist eine Erweiterung 27 auf, welche eine umlaufende Schulter 28 bildet. In eingeführter Stellung des Spreizdübels liegen die Ringscheiben 3 mit deren Aussenrand axial im Bereich der Erweiterung 27.

Nach dem Einstossen des Spreizdübels wird das Einführwerkzeug 21, unter Druckausübung in Einführrichtung, um 90° gedreht, was auch zu einem 90-grädigen Verdrehen des Spanngliedes 2 führt. Letzteres wird dadurch vom Stützlager 1 entkuppelt (Fig. 7) und alsdann mittels des die Spannhülse 5 nach wie vor unterfassenden Einführwerkzugs 21 aus der Aufnahmebohrung 25 zurückgezogen, wobei die Anschlagschultern 9 die Ringscheiben 3 zentrieren. Die Ringscheiben 3 entspannen sich und erweitern sich dadurch radial unter Eingriff in die Erweiterung 27, wie dies der Fig. 8 entnommen werden kann. In den Fig. 8 und 9 ist das Stützlager 1 aus Gründen der Verdeutlichung einer weiteren Funktion der Zapfen 19 gegenüber den Fig. 6 und 7 um 90° verdreht dargestellt.

Die Fig. 9 zeigt den Spreizdübel im Verwendungseinsatz. Ein insgesamt mit 29 bezeichnetes Anschlussteil durchragt mit einem Gewindebolzen 31 die Bohrung der Ringscheiben 3 und ist in das Innengewinde 17 des Stützlagers 1 eingeschraubt. Ein gewindefreier Fortsatz 32 drängt beim Einschraubvorgang die Zapfen 19 über die Mantelkontur des Stützlagers 1 hinaus radial nach aussen und presst diese so gegen die Wand der Aufnahmebohrung 25. Dadurch wird ein Mitdrehen des Stützlagers 1, insbesondere beim Verspannen der Ringscheiben 3 zwischen einem Kopf 33 und dem Stützlager 1, unterbunden. Der Kopf 33 weist ein Innengewinde 34 auf, in welches eine Schraube 35 eingreift. Die Schraube 35 spannt über eine Beilagscheibe 36 einen zu befestigenden Gegenstand 37 gegen den Untergrund 26. Durch das Anziehen der Schraube 35 wird das Anschlussteil 29 gegen die Mündung der Aufnahmebohrung 25 gezogen, was zu einem Mitverschieben des Stützlagers 1 und der Ringscheiben 3 bis zur Anlage an der Schulter 28 der Erweiterung 27 führt. Durch entsprechendes Anziehen der Schraube 35 werden die Ringscheiben 3 etwas in die Aufnahmebohrung 25 eingezogen und dadurch elastisch im wesentlichen zu einer Kegelform deformiert. Zufolge dieser Deformation lässt sich Relaxation des Untergrundes 26 kompensieren und dynamische Belastungen können ohne Beeinträchtigung der Verankerung des Spreizdübels aufgenommen werden.

## Patentansprüche

1. Spreizdübel mit unter Federkraft in ihrer Axialprojektion radial ausrückbaren Spreizelementen, einem den Spreizelementen in Setzrichtung vorgelagerten, Lastangriffsmittel (17) aufweisenden Stützlager (1) und einem die Spreizelemente in eingerückter Stellung haltenden lösbaren Spannglied (2), **dadurch gekennzeichnet,** dass die Spreizelemente als radial geschlitzte, in eingerückter Stellung zwischen dem Stützlager (1) und dem Spannglied (2) verspannte, im wesentlichen in hohlkegelige Form gebrachte Ringscheiben (3) aus Federblech ausgebildet sind.

2. Spreizdübel nach Anspruch 1, dadurch gekennzeichnet, dass die Angriffspunkte zwischen dem Spannglied (2) und den Ringscheiben (3) dem Zentrum der Ringscheiben (3) näher liegen als die Angriffspunkte zwischen dem Stützlager (1) und den Ringscheiben (3).

3. Spreizdübel nach Anspruch 1 oder 2, dadurch gekennzeichnet, dass die Angriffspunkte des Spanngliedes (2) von einer zumindest teilweise sich zu den Ringscheiben (3) hin kegelförmig erweiternden Stirnseite (15) des Spanngliedes (2) gebildet sind.

4. Spreizdübel nach einem der Ansprüche 1 bis 3, dadurch gekennzeichnet, dass die Angriffspunkte des Stützlagers (1) von einer zumindest teilweise sich zu den Ringscheiben (3) hin kegelförmig erweiternden Stirnseite (18) des Stützlagers (1) gebildet sind.

5. Spreizdübel nach einem der Ansprüche 1 bis 4, dadurch gekennzeichnet, dass das Spannglied (2) und das Stützlager (1) Kupplungsmittel (7, 19) zur gegenseitigen Arretierung in der die Ringscheiben (3) eingerückt haltenden Stellung aufweisen.

6. Spreizdübel nach Anspruch 5, dadurch gekennzeichnet, dass die Kupplungsmittel (7, 19) bajonettverschlussartig ausgebildet sind.

7. Spreizdübel nach Anspruch 6, dadurch gekennzeichnet, dass die bajonettverschlussartigen Kupplungsmittel im Stützlager (1) radial verschiebbare, in eine Zentralbohrung des Stützlagers (1) ragende, über die Mantelkontur des Stützlagers (1) ausrückbare Zapfen (7) aufweisen.

## Claims

1. An expansible dowel comprising radially disengageable expansion elements which are under spring tension in their axial projection, a supporting bearing (1) which is mounted in front of the expansion elements in the setting direction and which has a load-application means (17), and a releasable tensioning member (2) which holds the expansion elements in their engaged position, characterised in that the expansion elements are radially slotted rings discs (3) made of spring plate which are braced in the engaged position between the supporting bearing (1) and the tensioning member (2) and which are brought substantially into a hollow-conical shape.

2. An expansible dowel according to claim 1, characterised in that the application points between the tensioning member (2) and the ring discs (3) lie nearer to the centre of the ring discs (3) than do the application points between the supporting bearing (1) and the ring discs (3).

3. An expansible dowel according to claim 1 or 2, characterised in that the application points of the tensioning member (2) are formed by an end face (15), widening conically at least partially towards the ring discs (3), of the tensioning member (2).

4. An expansible dowel according to any one of claims 1 to 3, characterised in that the application points of the supporting bearing (1) are formed by an end face (18), widening conically at least partially towards the ring discs (3), of the suporting bearing (1).

5. An expansible dowel according to any one of claims 1 to 4, characterised in that the tensioning member (2) and the supporting bearing (1) have coupling means (7, 19) for mutual locking in the engaged position of the ring discs (3).

6. An expansible dowel according to claim 5, characterised in that the coupling means (7, 19) are designed in a bayonet-catch-like-manner.

7. An expansible dowel according to claim 6, characterised in that the bayonet-catch-like coupling means have tenons (7) which are radially displaceable in the supporting bearing (1) and which project into a central bore of the supporting bearing (1) and which are disengageable over the surface of the supporting bearing (1).

## Revendications

1. Cheville à expansion comprenant des éléments d'écartement qui, dans leur projection axiale, peuvent être écartés radialement sous l'effet de ressort, un support (1) précédant les éléments d'écartement dans le sens de l'enfoncement et présentant des moyens d'application de la charge (17) et un élément de serrage (2) amovible qui maintient les éléments d'écartement dans la position rentrée caractérisée en ce que les éléments d'écartement sont conformés en rondelles (3) en acier à ressort fendues radialement, bloquées dans la position rentrée entre le support (1) et l'élément de serrage (2) et amenées sensiblement en une forme de cône creux.

2. Cheville à expansion selon la revendication 1, caractérisée en ce que les points d'appui entre l'élément de serrage (2) et les rondelles (3) se situent plus près du centre desdites rondelles (3) que les points d'appui entre le support (1) et les rondelles (3).

3. Cheville à expansion selon l'une des revendications 1 ou 2, caractérisée en ce que les points d'appui de l'élément de serrage (2) sont constitués par une face frontale (15) de l'élément de serrage (2) qui s'élargit du moins partiellement de manière conique en direction des rondelles (3).

4. Cheville à expansion selon l'une des revendications 1 à 3, caractérisée en ce que les points d'appui du support (1) sont constitués par une face frontale (18) du support (1) qui s'élargit du moins partiellement de manière conique en direction des rondelles (3).

5. Cheville à expansion selon l'une des revendications 1 à 4, caractérisée en ce que l'élément de serrage (2) et le support (1) comportent des moyens d'accouplement (7, 19) pour le blocage mutuel dans la position dans laquelle les rondelles (3) sont maintenues dans la position rentrée.

6. Cheville à expansion selon la revendication 5, caractérisée en ce que les moyens d'accouplement (7,19) sont réalisés sous la forme d'un emboîtement à baïonnette.

7. Cheville à expansion selon la revendication 6, caractérisée en ce que les moyens d'accouplement en forme d'emboîtement à baïonnette comportent des ergots (7) pouvant être déplaces radialement dans le support (1), dépassant dans un alésage central du support (1) et pouvant être repoussés au-delà du contour de l'enveloppe du support (1).

## Fig.3

## Fig.1

## Fig.2

## Fig.4

## Fig.5

Fig.6    Fig.7    Fig.8    Fig.9

EP 0 273 006 B1